# EUROPEAN PATENT SPECIFICATION

(11) **EP 3 067 399 B1**
(45) Date of publication and mention of the grant of the patent: **12.06.2019**
(21) Application number: 15158808.4
(22) Date of filing: 12.03.2015
(51) Int. Cl.: C09D 175/04, C08G 18/40, C08G 18/62, C08G 18/24, C08G 18/50, C08G 18/08, C08G 18/67, C08G 18/48, C08G 18/66, C08F 290/14, C09J 175/04, C08L 23/28

(54) **AQUEOUS POLYURETHANE ACRYLATE HYBRID DISPERSIONS**
WÄSSRIGE POLYURETHAN-ACRYLAT-HYBRID-DISPERSIONEN
DISPERSIONS HYBRIDES D'ACRYLATE DE POLYURÉTHANE EN PHASE AQUEUSE

(43) Date of publication of application: 14.09.2016
(73) Proprietor: Henkel AG & Co. KGaA, 40589 Düsseldorf (DE)
(72) Inventor: Zhao, Ligang, 40593 Düsseldorf (DE); Sauca, Sorin N., Timisoara, 300152 (RO); Berges, Christina, c.p. 500010 Zaragonza (ES)

(56) References cited:
- US-A- 5 334 420
- US-A- 5 916 965
- GUSTAFSON I ET AL: "Synthesis and characterization of water-swellable polyurethane urea gels containing allyloxy groups. II", REACTIVE POLYMERS, ELSEVIER SCIENCE PUBLISHERS, AMSTERDAM, NL, vol. 14, no. 2, 1 March 1991 (1991-03-01), pages 103-110, XP024174092, ISSN: 0923-1137, DOI: 10.1016/0923-1137(91)90268-S [retrieved on 1991-03-01]

## Description

The present invention relates to aqueous polyurethane/acrylic hybrid dispersions that can be used as adhesives or coatings, are surfactant and solvent free and have low VOC emissions, are environmentally friendly, are cost-efficient due to having high acrylic contents, and provide for homogeneous and aging-resistant adhesives after drying. As hybrid materials, they provide for a versatile system that can be finely tuned and combines the advantageous properties of polyurethane and polyacrylate materials. Also encompassed are processes for their production, compositions containing them and their use as coatings and adhesives.

Polyurethane/acrylic hybrid waterborne dispersions are innovative materials that combine in a unique system the typical properties of the two different polymeric components, resulting in most cases in materials with improved properties. Whereas polyurethanes (PU) provide chemical resistance, good film formation properties, toughness, flexibility or superior low-temperature impact resistance, polyacrylates (PA) improve the water and weathering resistance, the anti-aging properties (yellowing reduction) and the gloss. Hence, this combination of properties makes these hybrid latexes suitable candidates to be used as adhesive for lamination of thermoplastic materials to rigid substrates typically used in the automotive industry.

Most of the known and available waterborne polyurethane/acrylic systems are based on blending of PU and acrylic dispersions or, alternatively, on solvent or surfactant based dispersions. Such known systems are described, for example, in US 4,644,030.

However, since both polymers are not miscible at molecular level, the blending generally results in films with low quality and phase separation. To solve this drawback, water-based polyurethane-acrylate hybrids dispersions have been thoroughly investigated and their use as coatings or adhesives for substrates such as wood, rubber, leather or ABS is well known. EP 2 348 061 A1, for example, describes polyurethane polyacrylate hybrid systems that are produced by combining a polyurethane with ethylenically unsaturated monomers and subsequently polymerizing the ethylenically unsaturated monomers.

US 5334420 A discloses a process for production of a multicoat finish, in which an aqueous basecoat is used which contains as a binder a polymer which can be obtained by polymerizing in an organic solvent (A) ethylenically unsaturated monomers in presence of (B) a polyurethane resin containing polymerizable double bonds and converting the resultant reaction product to an aqueous dispersion. US 5916965 A discloses water-based paint composition containing a hardener at 50-10 parts by weight to 50-90 parts by weight (solids) of an aqueous dispersion obtained by polymerizing an aqueous dispersion of a polyurethane resin of a number-average molecular weight of 1000-50,000, an acid value from carboxyl groups of ≦50 mg KOH/g, a sulfonate group content of 0.05-0.6 mol/1000 g, an allyl content of 0.1-1.1 mol/molecule and an acetate tolerance of ≧5 in the aqueous dispersion with ethylenic unsaturated monomers in a proportion as a weight ratio of polyurethane resin/ethylenic unsaturated monomer of 5/95-60/40.

The existing dispersions are however still not satisfactory with respect to film quality and phase separation as well as the amount of acrylics that can be incorporated.

In addition, the adhesion to low energy surfaces, i.e. polyolefins used in car lamination applications, remains challenging for systems purely based on polar polymers, e.g. polyurethanes, polyacrylates or cyanoacrylates, due to the lack of interaction and compatibility of film and substrate. In order to overcome this problem, the use of primers or additives is generally required; however, this commonly entails costly and time-consuming procedures or utilization of organic solvents.

There exists thus need in the art for improved polyurethane/acrylic hybrid systems that overcome at least some of the drawbacks of known systems.

The present invention described herein solves the known issues, allowing the production of waterborne polyurethane/acrylic hybrid dispersions without surfactants in an environmentally friendly process. The invention generally relates to a method to produce a dispersion of polyurethane/acrylic hybrid particles in water, without using any surfactants, by applying shear forces. To obtain stable dispersions anionic stabilizers are incorporated into the polyurethane chain, not affecting the water resistance of the final product. The blending of the different systems is achieved by formation of hybrid particles having a core shell morphology that comprise a mostly acrylate core and a polyurethane shell, which are cross-linked by cross-linking monomers, in particular vinyl-functionalized polyols, that are incorporated into the polyurethane backbone structure during prepolymer formation.

In a first aspect, the present invention thus relates to a process for manufacturing an aqueous polyurethane acrylate hybrid polymer dispersion, the process including:
(1) forming an NCO-terminated, vinyl-functionalized polyurethane prepolymer from a reaction mixture comprising:
   (a) at least one polyol with a number average molecular weight Mₙ in the range of 400 to 10000 g/mol, preferably 500 g/mol to 4000 g/mol, more preferably 1000 g/mol to 3000 g/mol, wherein said polyol is a non-functionalized polyol contains no functional groups besides the hydroxyl groups;
   (b) at least one vinyl-functionalized polyol, preferably an allyl-functionalized polyol, wherein the at least one vinyl-functionalized polyol comprises at least two hydroxyl groups and at least one vinyl group;
   (c) at least one halogenated polyether polyol;
   (d) at least one anionic stabilizer, wherein the at least one anionic stabilizer comprises at least two hydroxyl groups and at least one negatively charged functional group, preferably a carboxyl or sulfonic acid group;
   (e) at least one polyisocyanate, preferably at least one aliphatic di- and/or triisocyanate, wherein the at least one polyisocyanate is used in molar excess relative to the hydroxy groups of the other components of the reaction mixture to obtain an NCO-terminated, vinyl-functionalized polyurethane prepolymer;
(2) dissolving the prepolymer obtained in step (1) in at least one acrylic monomer to obtain a prepolymer/acrylic monomer mixture, wherein the amount of the prepolymer and the at least one acrylic monomer is selected such that the weight proportion of polyurethane/acrylic in the hybrid polymer is 10:90 to 50:50, preferably 20:80 to 40:60;
(3) dispersing the prepolymer/acrylic monomer mixture into a continuous aqueous phase under application of shear forces, preferably by mechanical stirring, to obtain an emulsion;
(4) reacting the prepolymer with at least one chain extension agent; and
(5) polymerizing the vinyl groups of the prepolymer and the at least one acrylic monomer to obtain the polyurethane acrylate hybrid polymer dispersion.

In another aspect, the invention relates to the aqueous polyurethane acrylate hybrid polymer dispersion obtainable according to the process described herein.

Further aspects of the invention relate to adhesive or coating compositions that contain the aqueous hybrid polymer dispersion disclosed herein and the use of the aqueous hybrid polymer dispersion in adhesives and coatings.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

If reference is made herein to a molecular weight, this reference refers to the average number molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

The at least one polyol (a) is a non-functionalized polyol, e.g. contains no functional groups besides the hydroxyl groups. Particularly, it does not contain vinyl or halogen groups to distinguish it from polyols (b) and (c). The polyol (a) may be at least one polyester polyol, at least one polycarbonate polyol, at least one polyether polyol, at least one polybutadiene polyol, or, preferably, a mixture of any two or more of the afore-mentioned polyols. Also contemplated are thus mixtures of two or more polyester polyols and/or two or more polyether polyols and/or two or more polybutadiene polyols. In preferred embodiments, polyol (a) comprises a polybutadiene polyol, for example as defined below. In some embodiments, the polyol (a) comprises at least one polybutadiene polyol and may additionally comprise at least one polyester polyol, at least one polycarbonate polyol, at least one polyether polyol, or a mixture of any two or more of the afore-mentioned polyols. Particularly preferred are mixtures of at least one polybutadiene polyol with one or more polyester polyols. If a mixture of polyester and polybutadiene polyols is used, the weight ratio may range from about 10:1 to 1:10, preferably 1:2 to 2:1.

Polyester polyols that are useful in the processes described herein include those that are obtainable by reacting, in a polycondensation reaction, dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phthalic acid, isophthalic acid, trimellitic acid, phthalic acid anhydride, tetrahydrophthalic acid anhydride, glutaric acid anhydride, maleic acid, maleic acid anhydride, fumaric acid, dimeric fatty acid and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-otaneglycol cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol. Alternatively, they may be obtained by ring-opening polymerization of cyclic esters, preferably ε-caprolactone.

In various embodiments, the polyester polyol has a melting temperature Tₘ > 0°C, preferably > 40 °C and/or has an average number molecular weight Mₙ in the range of 400 to 5000, preferably 500 to 3000 g/mol, more preferably 800-2500 g/mol, most preferably 1000 to 2000 g/mol.

The polyether polyol may be a polyalkylene glycol homo- or copolymer, preferably a polypropylene glycol homo- or copolymer, a polyethylene glycol homo- or copolymer, a polytetramethylene glycol homo- or copolymer, or a polypropylenglycol/polyethyleneglycol block copolymer. In various embodiments, the polyether polyol has an average number molecular weight Mₙ of 400 to 4000, preferably 400 to 3000 g/mol.

The polybutadiene polyol is preferably a non-branched hydroxyl-terminated hydrogenated polybutadiene, i.e. a polybutadiene diol, with low molecular weight, preferably having a weight average molecular weight, M_{w}, of about 1000 to 20,000, more preferably about 1000 to 5,000, and a 1,2-vinyl content of about 5 mol percent or less, with an average hydroxyl functionality less than or equal to 2 per molecule. These non-branched polybutadienes are preferably derived from anionic polymerization and the hydroxyl groups can be primary or secondary.

Suitable polycarbonates can be obtained by reaction of carbon acid derivatives, e.g. diphenyl carbonate, dimethyl carbonate or phosgene with diols. Suitable examples of such diols include ethylene glycol, 1,2- and 1,3-propanediol, 1,3- and 1,4-butanediol, 1,6-hexanediol, 1,8-octanediol, neopentyl glycol, 1,4-bishydroxymethyl cyclohexane, 2-methyl-1,3-pro-panediol, 2,2,4-trimethyl pentanediol-1,3, dipropylene glycol, polypropylene glycols, dibutylene glycol, polybutylene glycols, bisphenol A, tetrabromobisphenol A as well as lactone-modified diols. The diol component preferably contains 40 to 100 wt. % hexanediol, preferably 1,6-hexanediol and/or hexanediol derivatives. More preferably the diol component includes examples that in addition to terminal OH groups display ether or ester groups.

The hydroxyl polycarbonates should be substantially linear. However, they can optionally be slightly branched by the incorporation of polyfunctional components, in particular low-molecular polyols. Suitable examples include glycerol, trimethylol propane, hexanetriol-1,2,6, butanetriol-1,2,4, trimethylol propane, pentaerythritol, quinitol, mannitol, and sorbitol, methyl glycoside, 1,3,4,6-dianhydrohexites.

Suitable polycarbonate polyols are, without limitation, those obtainable under the trademark names Desmophen® C3200 (Bayer) and Kuraray® C2050 (Poly-(3-methyl-1,5-pentanediol, 1,6-hexanediol)carbonate; Kuraray).

The reaction mixture may further comprise monomeric diols, such as 1,4-butanediol.

The vinyl-functionalized polyol may be a vinyl group-containing diol. "Vinyl-functionalized polyol", as used herein, relates to compounds that comprise at least two hydroxyl groups and at least one vinyl group. Preferred are allyl-functionalized polyols, in particular polyol allyl ethers, wherein the polyol allyl ether is optionally selected from monoethers of allyl alcohol with a polyol with three or more hydroxyl groups, such as glycerol. In various embodiments, the vinyl-functionalized polyol is thus a monomeric polyol. Without being limited thereto, the vinyl-functionalized polyol typically has an average number molecular weight Mₙ less than 400 g/mol. A preferred vinyl-functionalized polyol useful according to the present invention is 3-allyloxy-1,2-propanediol (glycerol allyl ether; GAE). The terms "vinyl" and "allyl", as used herein, relate to the groups H₂C=CR and H₂C=CR-CR'R", respectively, wherein R, R' and R" are any residues.

The vinyl-functionalized polyol is built into the polyurethane prepolymer and provides for vinyl groups that can in subsequent steps be reacted with the acrylic monomers, thus providing for cross-linking of the polyacrylate and the polyurethane.

The reaction mixture further comprises at least one halogenated polyether polyol (c), such as chlorinated, brominated and/or fluorinated polyether polyols. A modified polyether polyol may also be maleated or maleated and halogenated. "Maleated", as used in this context, means that the polyether is grafted with maleic anhydride. These modified polyether polyols provide for an increased adhesion to surfaces with low surface energy due to their nonpolar properties. If a mixture of such a modified polyether polyol with polyester and polybutadiene polyols is used, the weight ratio may range from about 10:1:1 to 1:10:1 to 1:1:10, preferably 1:2:1 to 2:1:1 to 1:1:2.

The reaction mixture further comprises at least one anionic stabilizer. The term "stabilizer", as used herein in the context of anionic and nonionic stabilizers, relates to a class of molecules that can stabilize the droplets in a dispersion or emulsion, i.e. prevent coagulation or coalescence. In various embodiments the stabilizer molecules comprise a hydrophilic and a hydrophobic part, with the hydrophobic part interacting with the droplet and the hydrophilic part be exposed to the solvent. While commonly used stabilizers are surfactants and may bear an electric charge, for example may be anionic surfactants or cationic surfactants, or may, alternatively, be non-ionic, the present invention avoids the use of surfactants, but uses stabilizer compounds that are built into the polyurethane polymer during (pre)polymer formation that provide for self-emulsifiable polyurethanes which spontaneously form stable dispersions in water without the assistance of external emulsifiers and exhibit increased stability.

The stabilizers used herein comprise anionic groups. The presence of such charged groups increases the stability of the dispersed polymer droplets or particles. Suitable anionic groups include, but are not limited to acidic groups, such as carboxylic acid or sulfonic acid groups and their respective salts. Concrete compounds suitable as anionic stabilizers in the sense of the present invention are 2,2-bis(hydroxyalkyl)alkane monocarboxylic acids, in particular 2,2-bis(hydroxymethyl)alkane monocarboxylic acids with a total carbon atom number of 5-8, such as 2,2-bis(hydroxymethyl)propionic acid (dimethylol propionic acid; DMPA). Also suitable are sulfonated polydiols with a molecular weight M_{w} in the range of up to 1000 g/mol, preferably up to 500 g/mol. Such sulfonated polydiols, for example propoxylated 1-methyl-2-methylol-3-hydroxy-1-propanesulfonate with a molecular weight M_{w} of about 430 g/mol, are commercially available under the name GS-7Q (Yedang G & Co. Ltd).

In various embodiments, the above-described anionic stabilizers are combined with other compounds that can act as stabilizers, in particular nonionic stabilizers. In various embodiments, such nonionic stabilizers comprise polyols, preferably diols, or a mixture of different polyols and/or diols, including the monomeric diols and certain polyether polyols that have been described above in connection with the polyol (a). Such nonionic stabilizers have HLB (hydrophile lipophile balance) values between 6 and 19. The HLB values are calculated by calculating the molecular weight of the hydrophilic portion of the molecule and dividing said molecular weight of the hydrophilic part of the molecule by the total molecular weight of the molecule and then dividing the obtained percentage by 5. Typical nonionic stabilizers for oil-in-water emulsions have HLB values of 8-18. Preferred monomeric diols are glycols, such as ethylene glycol, propylene glycol, butylene glycol, neopentyl glycol and the like and (as polyether polyols) polymers thereof, such as polyethylene glycol, polypropylene glycol, and polybutylene glycol and copolymers of ethylene glycol, propylene glycol, and butylene glycol, preferably of ethylene glycol and propylene glycol. The average molecular weight M_{w} of such polymeric stabilizers is preferably in the range of up to about 4000 g/mol, preferably up to about 3000 g/mol, more preferably up to about 2000 g/mol. Suitable non-ionic ethylene glycol/propylene glycol stabilizers are for example those commercially available under the trademark name Pluronic® from BASF, for example Pluronic PE3500.

In preferred embodiments of the invention, the at least one anionic stabilizer, such as DMPA or a sulfonated polydiol, is combined with a nonionic polyol stabilizer, preferably diol stabilizer, as defined above. In one specific embodiment, the mixture comprises at least one ethyleneglycol/propyleneglycol copolymer with a molecular weight M_{w} of up to 3000 g/mol and at least one anionic diol stabilizer, preferably DMPA or a sulfonated polydiol.

In such mixtures the weight ratio of non-ionic to anionic stabilizer usually ranges from about 0:1 to about 20:1.

The term "reaction mixture", as used herein, relates to the mixture of the polyols, including the vinyl-functionalized polyol, the stabilizer(s) and the polyisocyanate(s). "Polyol mixture", as used herein in relation to the mixture comprising the polyols, relates to a mixture comprising the at least one polyol (a), the at least one vinyl-functionalized polyol, the at least one stabilizer, the at least one halogenated polyether polyol, and, optionally, any additional polyols that may be present.

It is preferred that the polyol mixture does not contain any organic solvents or surfactants and no further additives, i.e. consists of polyols, preferably those defined above, and the stabilizers and optionally the (modified) polyolefins, polyacrylic resins, rosin-based resins or derivatives thereof defined below.

In various embodiments, the polyol mixture comprises about 20 to about 99 wt.-%, preferably 30 to 85 wt.-%, of the at least one polyol (a), preferably a mixture of different polyols, for example of polyester polyols, polybutadiene polyols and polyether polyols, relative to the weight of the polyol mixture. The at least one polyol (a) may comprise a nonionic stabilizer polyol as defined above.

The vinyl-functionalized polyol may be comprised in amounts of up to 10 wt.-% relative to the weight of the polyol mixture, but usually is used in an amount of about 1 to about 3 wt.-%, preferably 1.5 to 2.5 wt.-%.

The anionic stabilizer is usually contained in amounts of about 1 to 20 wt.-%, preferably 4 to 8 wt.-%, relative to the weight of the polyol mixture. If a mixture of stabilizing compounds is employed, anionic stabilizers as defined above, may be used in amounts of 1 to 15 wt.-% and non-ionic stabilizers in amounts of 1 to 30 wt.-% relative to the polyol mixture.

The modified polyether polyol, if present, is in various embodiments used in amounts of up to 15 wt.-%, relative to the weight of the polyol mixture, preferably 4-10 wt.-%.

In various embodiments, the nonpolar polyols, e.g. polybutadiene polyols and modified polyether polyols, such as halogenated polyether polyols, are used in amounts of up to 35, preferably up to 30, more preferably up to 25 wt.-% relative to the total weight of the polyol mixture. The lower limit is, in some embodiments, 5 wt.-%, preferably at least 10 wt.-%. This ensures good adhesion on surface with low surface energies.

The final reactant employed in the formation of the polyurethane prepolymer is a polyisocyanate. Any compound which includes at least two isocyanate groups is within the contemplation of the present invention. It is preferable, however, that the polyisocyanate be a diisocyanate. The incorporation of small amounts of isocyanate with a functionality higher than two, in particular a triisocyanate, is also contemplated and may under certain circumstances even be advantageous. Such polyisocyanates can act as cross-linkers. In this case where the polyisocyanate acts as a cross-linker, polyisocyanates based on hexamethylene diisocyanate are preferred. Suitable diisocyanates include, without limitation, methylenediphenyl diisocyanate (MDI), toluene-2,4-diisocyanate (TDI), hexamethylene diisocyanate (HDI), polymeric diphenylmethane diisocyanate (PMDI), isophorone diisocyanate (IPDI), methylene-4,4-bis(cyclohexyl)diisocyanate (H12MDI) and mixtures thereof. Although both aliphatic and aromatic polyisocyanates are within the contemplation of the present invention, it is preferred that the polyisocyanate be an aliphatic polyisocyanate. Thus, in a particularly preferred embodiment, the polyisocyanate is an aliphatic diisocyanate. Among particularly preferred aliphatic diisocyanates are isophorone diisocyanate, hexamethylene diisocyanate, and mixtures thereof. Suitable polyisocyanates are, for example, commercially available under the trademark name Desmodur® from Bayer AG (DE).

The polyisocyanate is used in molar excess relative to the OH groups of all polyols present in the reaction mixture, i.e. in a concentration in excess of the stoichiometric concentration required to completely react with the hydroxyl groups, the OH/NCO equivalent ratio preferably being 1:1.1 to 1:4, more preferably 1:1.2 to 1:1.3. Preferably, the amount of the polyisocyanate is 20 % to 150 % in excess of the stoichiometric concentration required to completely react with the hydroxyl groups. The amount of the at least one polyisocyanate in the reaction mixture is typically in the range of 10 to 30 wt.-% relative to the reaction mixture. The remainder of the reaction mixture may be made up by the polyol mixture, as defined above.

Providing the polyol mixture may include the step of mixing the polyols (a) and (b) and the stabilizers and heating the mixture. The heating may be required in case the polyols employed are solid at room temperature and need to be melted to form the polyol mixture. In preferred embodiments, the polyols and the at least one stabilizer are combined and heated to about 70 to 95°C, for example about 75°C, while stirring the mixture under vacuum to dry. After the mixing, the mixture may be cooled to 60°C for the addition of the isocyanates.

"About", as used herein, relates to ± 10 %, preferably ± 5 % of the numerical value to which it refers. "About 70 °C" thus relates to 70 ± 7, preferably 70 ± 3.5 °C.

The polyol mixture is subsequently combined with at least one polyisocyanate in the reaction mixture to form the prepolymer. The prepolymer reaction usually occurs at elevated temperature, preferably in the range of between about 60 °C and about 95 °C, more preferably about 60-80 °C, over a period of between about 1 and about 24 hours. The reaction is typically carried out in the presence of a catalyst that is added, preferably a tin-based catalyst, more preferably dimethyldineodecanoatetin, such as Fomrez UL28. In preferred embodiments of the invention, the reaction mixture thus further comprises a catalyst as defined above.

The reaction continues until the free isocyanate content reaches or comes very close to the calculated value, as determined by standard titration with dibutylamine. Preferred values for the free isocyanate content in the prepolymer are in the range between 0.2 and 3 wt.-%, preferably 1 to 2 wt.-% relative to the total amount of polyols, including the stabilizer(s), and polyisocyanate in the mixture.

Once the free isocyanate content reaches the predetermined value, as defined above, the temperature may be reduced, for example to about 60 °C.

In various embodiments, the prepolymer has an average number molecular weight Mₙ of 3000 to 12000, preferably 3000 to 6000, more preferably 4000 to 5000 g/mol.

The obtained prepolymer is then dissolved in at least one acrylic monomer, preferably a mixture of two or more different acrylic monomers. The acrylic monomers are preferably selected from acrylate monomers, methacrylate monomers and mixtures thereof, preferably hydrophobic acrylate monomers, methacrylate monomers and mixtures thereof, more preferably esters of (meth)acrylic acid with mono alcohols having 1 to 20, preferably 2 to 8 carbon atoms. Particularly preferred are ethyl(meth)acrylate, butyl(meth)acrylate, 2-ethylhexyl(meth)acrylate and octyl(meth)acrylate. "Acrylic", as used herein, relates to acrylates and methacrylates. Similarly, the term "(meth)acrylate", refers to the methacrylate or the acrylate.

The amounts of the prepolymer and the acrylic monomers are selected such that the weight proportion of polyurethane to acrylic in the final hybrid polymer is from 10:90 to 50:50, preferably 20:80 to 40:60. The methods described herein allow the use of comparably high amounts of acrylics without the risk of phase separation in the resulting films. With wishing not to be limited to a particular theory, it is believed that this is attributable to the crosslinking with vinyl groups that are pendant to the PU prepolymer chain instead of using vinyl-endcapped polymer chains only as well as the core-shell morphology of the particles that arises from the specific steps, more particularly the order of the steps of the described methods.

It is also possible to use mixtures of different acrylic monomers. In preferred embodiments, one or more alkyl(meth)acrylates are used, preferably n-butylacrylate, n-butylmethacrylate, ethylmethacrylate or mixtures of any two or more thereof.

To dissolve the prepolymer in the acrylic monomers, the mixture may be heated, for example to a temperature of 40 to 70 °C, preferably 50 and 60 °C, preferably under stirring. Alternatively or additionally, a cosolvent may be used. Preferred are organic cosolvents, in particular those being fully miscible with water, such as acetone. In various embodiments, such cosolvents, in particular acetone, are used in amounts of up to 50 wt.-%, preferably up to 40 wt.-%, more preferably up to 25 wt.-% relative to the prepolymer/acrylic monomer/cosolvent mixture. The cosolvent is preferably removed after step (5), for example by vacuum distillation.

In various embodiments, the prepolymer may be neutralized at this stage by using a suitable neutralization agent. In case an anionic acidic stabilizer is used, an amine base, such as triethylamine may be used.

The thus formed prepolymer/acrylic monomer mixture is then dispersed in a continuous aqueous phase, preferably water. The dispersing step may be carried out at elevated temperature, for example in the range of about 30 to 60 °C, for example at about 40 °C. The dispersing step may include emulsifying the polyurethane prepolymer/acrylic monomer mixture into a continuous aqueous phase, preferably water, to form an emulsion, preferably under the action of a shear force. In various embodiments, the shear force is brought about by means of mechanical stirring only, for example using a mechanical stirrer at about 900 rpm.

The term "emulsion", as used herein, relates to oil-in-water (O/W) emulsions, i.e. emulsions in which water is used in excess and is the continuous medium. In the described processes, stable droplets are obtained, which have typically a size between 50 and 500 nm, preferably between 100 and 400 nm, as determined by dynamic light scattering (DLS) according to ISO 22412.

In various embodiments, the reaction mixture in step (1) and/or the at least one acrylic monomer in step (2), additionally comprises at least one (modified) polyolefin, polyacrylic or rosin-based resin. Alternatively or additionally, a dispersion of at least one (modified) polyolefin, polyacrylic or rosin-based resin is incorporated into the continuous aqueous phase in step (3). The (modified) polyolefin, polyacrylic or rosin-based resins can comprise highly polar and highly unpolar segments, which increase the compatibility between the forming adhesive and highly unpolar substrates to be bonded by the adhesive. The terms "highly polar segments" and "highly unpolar segments", respectively, relate to parts or regions of the resins that are highly polar and highly unpolar, respectively. The length of said segments is not particularly limited and the resins may be block copolymers of highly polar and highly unpolar monomeric units, but also statistical polymers as long as the resulting polymers possess the desired compatibility. It is however preferred that the respective polymers/resins are block copolymers comprising highly polar and highly unpolar segments.

As described above, the (modified) polyolefins, polyacrylics or rosin-based resins are included in the reaction mixture in step (1) of the inventive method, or are added together with the acrylates in step (2), for example solved in the acrylate monomers, or provided in form of the continuous aqueous phase and added with the water in step (3), for example in form of a dispersion or emulsion. Introducing the (modified) polyolefins, polyacrylics or rosin-based resins in these steps of the method ensures that they are mixed at molecular level with the forming (pre)polymer, which is dissolved in the acrylates during the homogenization step, thus obtaining hybrid nanoparticles with the polyolefins/resins blended inside the particles.

Accordingly, the polyurethane/acrylic hybrid polymer may be a blend of a polyurethane/acrylic hybrid copolymer and the (modified) polyolefin, polyacrylic or rosin-based resin. These blends are also referred to herein as polyurethane/acrylic/(modified) polyolefin, polyacrylic or rosin-based resin hybrid polymer dispersions.

While above reference is made to the (modified) polyolefins, polyacrylic and rosin-based resins as alternatives, it is understood that in certain embodiments, at least one of two or each of the compound classes may be used and, for example, blended into the hybrid polymer dispersion.

In preferred embodiments, the inventive methods ensure blending of the components at a molecular level that prevents later phase separation.

The polyolefins are preferably polyethylene, polypropylene, polybutadiene, polyisoprene, polystyrene or copolymers of any two or more thereof, optionally modified, for example halogenated or modified such that the polymer includes a carboxyl group. The polyolefins may also be modified with a resin, such as maleic resin. In preferred embodiments, the (modified) polyolefins are selected from halogenated polyolefin maleic acid copolymer, such as chlorinated polypropylene maleic resin, polyolefin maleic acid copolymer, styrene/ethylene-butylene, styrene/butadiene, styrene/ethylene-propylene, or styrene/isoprene copolymers. Suitable polyolefins are commercially available from Toyobo Co., Ltd. under the trademark names Hardlen® NZ-1004, NZ1015, Hardlen® EH-801J and Hardlen® CY-9124/9122, and from KRATON Performance Polymers Inc. under the trademark names Kraton® G1643E and Kraton® G1640ES.

The term "polyacrylic resin", as used herein, relates to (meth)acrylate-based resins that are preferably copolymers of (meth)acrylate esters and (meth)acrylic acid. The (meth)acrylate esters may be hydrophobic (meth)acrylate esters, such as butyl (meth)acrylate or 2-ethylhexyl (meth)acrylate. Preferably, said polyacrylic resins comprise carboxylic acid groups that provide for the polar segments of the polymer. In various embodiments, said polyacrylic resins are provided in form of aqueous dispersions. Suitable commercially available resins include, without limitation, Acronal® A225 (BASF, SE).

The terms "rosin resin" or "rosin-based resins", as interchangeably used herein, relate to resins derived from rosin. Rosin is a natural product from conifers. The gum rosin, which is the preferred rosin, according to the present invention, is a blend of 8 rosin acids, namely abietic acid, neobiabietic acid, dehydroabietic acid, palustric acid, levopimaric acid, pimaric acid, isopimaric acid and sandaracopimaric acid. The rosin may be modified by hydrogenation, esterification, preferably with alcohols, such as methanol, triethylene glycol, glycerol and pentaerythritol, dimerization, and functionalization. Functionalization preferably refers to further esterification of rosin esters (with polyols), such as those mentioned above, with diacids, such as maleic acid or fumaric acid. Preferred rosin-based resins in the sense of the present invention are rosin acid resins and rosin ester resins. Rosin acid resins include the rosin acids mentioned above, optionally also in (partially) hydrogenated or dimerized form, or rosin esters functionalized with dicarboxylic acids, preferably maleic acid. Rosin-ester resins include the esters of the rosin acids described above with polyols, such as triethylene glycol, glycerol or pentaerythritol. These esters can be dispersed in water using surfactants, thus yielding rosin-ester resin dispersions. Suitable rosin resins are for example available under the trademark names Staybelite™ A rosin acid (Pinova Inc.), Staybelite™ E rosin ester (Eastman) and PEXALYN® T100 (Pinova Inc), and suitable rosin dispersions are for example available under the trademark names Tacolyn® 3509E , Tacolyn® 3166, Tacolyn® 3179H, Snowtack® 765A and Snowtack®779F.

During chain extension in step (4), the isocyanate end-groups of the prepolymer are reacted with an appropriate chain extender containing at least two terminal NCO-reactive groups, for example a diamine, such as hydrazine, an alkylene diamine or cycloalkylene diamine, preferably ethylene diamine, isophorone diamine, piperazine, or polyetheramine. Diols, such as an alkyldiol, including but not limited to 1,4-butanediol and 2-butyl-2-ethyl-1,3-propanediol, or water can also be used. The chain extension reaction may be performed until essentially total conversion of the isocyanate groups, i.e. the chain extension agent is continuously added until free isocyanate groups are no longer detectable. It is generally preferred that the chain extension reaction is carried out until total conversion of the isocyanate groups. The conversion can be monitored by techniques well-established in the art, for example IR spectroscopy.

The presence of a catalyst and/or higher temperature may also be required. Preferred chain extension agents useful according to the present invention include ethylene diamine, water, isophorone diamine, and/or a polyetherdiamine.

After chain extension, the polymerization of the acrylic monomers and the vinyl groups present in the prepolymer is carried out by the appropriate polymerization process, preferably by radical polymerization. For this purpose, polymerization initiators can be used. Readily usable initiators may be thermally activatable or redox activatable and are preferably selected from radical initiators. Suitable radical initiators are widely known in the art and readily available and include organic azo or peroxo compounds. The initiators are preferably water-soluble. When the polymerization is initiated by water-soluble initiator, free radicals generate in aqueous phase first and diffuse to water/monomer interface to initiate the polymerization inside droplets. Exemplary initiators used herein include potassium peroxodisulfate (KPS) or initiator systems based on formamidinesulfinic acid with tert-butyl hydroperoxide (TBHP). The polymerization can be carried out at elevated temperature, for example a temperature in the range of 20-85°C, preferably 40-58°C. The polymerization time can range from 0.1 to 24 hours, preferably 0.5-6 hours, more preferably 1-3 hours.

The aqueous polyurethane/acrylic hybrid dispersion formed preferably has a solid content of 30 to 60 wt.-%, preferably 40 to 50 wt.-%. The viscosity is preferably in the range of 50 to 10000 mPas, preferably 100 to 1000 mPas as determined by a Brookfield viscosimeter, spindle 4, 20 rpm. The viscosity may be adjusted to suit the desired application form by adding a thickener. Suitable viscosity adjusting and thickening agents are well known in the art. The particle size as determined by dynamic light scattering (DLS) is preferably in the range of 50 to 500 nm, more preferably 100 to 400 nm. The application drying temperature can range from 20 to 100°C, but preferably is about 60 to 80°C.

The aqueous polyurethane/acrylic hybrid dispersions may then be used as an adhesive or coating, in particular coatings/adhesives for highly unpolar materials, such as polypropylene or polypropylene/ethylene propylene diene monomer (PP/EPDM), PVC and polypropylene foams, as well as polyurethane foams and polyurethane leather, and hence are particularly suitable for application in car manufacturing processes.

For specific highly unpolar materials, the aqueous polyurethane/acrylic hybrid dispersions described herein may be further blended with at least one rosin resin dispersion, at least one polyacrylic resin dispersion and/or at least one (modified) polyolefin. The resulting blend further increases the compatibility between the synthesized dispersions and the highly unpolar materials. For this type of blending, the same (modified) polyolefins, polyacrylic or rosin-based resins that have been described above in connection with the hybrid polymer dispersions may be used. The polyacrylic and rosin-based resins are preferably used in form of aqueous dispersions. Particularly preferred are maleated polyolefins. In various embodiments, the PU/acrylic hybrid dispersions are blended with the resin dispersions in a weight ratio of 10:1 to 1:1, preferably 4:1 to 2:1, more preferably about 3:1.

The present invention thus also relates to adhesive compositions that comprise the aqueous polyurethane/acrylic or polyurethane/acrylic/(modified) polyolefin, polyacrylic or rosin-based resin hybrid dispersions optionally in combination, i.e. blended with, with at least one further (aqueous) rosin-based resin dispersion, at least one (aqueous) polyacrylic resin dispersion and/or at least one further (modified) polyolefin. Said further resin may be as defined above.

Such adhesive or coating compositions can contain further ingredients all of which are well known in the field. It is however preferred that neither the dispersions nor the final compositions containing the dispersions contain organic solvents. Accordingly, as described above, in case a cosolvent has been used for the dispersion of the PU prepolymer/acrylic monomer mixture, said cosolvent is removed after polymerization of the acrylic monomers, such that, in various embodiments, the dispersions and/or compositions are essentially free of organic solvents. "Essentially free", as used in this context, means that the dispersion and/or composition contains less than 5 wt.-% of the given component, preferably less than 2 wt.-%, more preferably less than 1 wt.-%.

The adhesives containing the dispersions described herein show good adhesive strength, while being solvent free and thus environmentally friendly.

The adhesives can be applied to the substrate by all known techniques, including without limitation, spraying, painting, dip-coating, spin-coating, printing and the like.

It is understood that all embodiments disclosed herein in relation to the methods are similarly applicable to the disclosed dispersions, compositions, and uses and vice versa.

The following examples are given to illustrate the present invention. Because these examples are given for illustrative purposes only, the invention should not be deemed limited thereto.

### Examples

### Example 1:

Realkyd 20112 polyester polyol (38.4 g), Krasol HLBH-P 2000 saturated polybutadiene polyol (11.01 g), Ixol M125 halogenated polyether polyol (5.52 g), DMPA anionic stabilizer (4.78 g), Pluronic PE3500 (9.04 g) nonionic stabilizer and Staybelite A rosin acid (5.04 g; partially hydrogenated abietic acid; Pinova Inc.) were placed in a 1000 mL three necked round bottom flask equipped with a condenser and a mechanical stirrer. The mixture was heated to 75 °C. At this temperature, the solid components melted and a homogeneous mixture was obtained. At this point, high vacuum was applied (< 0.1 mbar) while the temperature was set to 75 °C in order to remove water. The mixture was left stirring under vacuum at 75°C for three hours.

Once dried, the vacuum was stopped and the mixture was flushed with argon, cooled to 60 °C and GAE (3-Allyloxy-1,2-propanediol, 0.75 g) was added to the mixture (no temperature increase was observed), and then IPDI (isophorone diisocyanate, 22.19 g) was also added (again, no temperature increase was observed).

Then the first portion of the catalyst (dimethyldineodecanoatetin, 20 mg of a freshly prepared tin catalyst (Fomrez UL-28) / acetone, 1:1 mixture) was added. Upon addition of the catalyst, the temperature raised rapidly to 80 °C. When the temperature increase stopped, the heating was set to 80 °C and once at this temperature, it was stirred for 1 hour and a second identical portion of catalyst solution was added. The reaction mixture was left stirring at 60 °C overnight and NCO-content measured next morning: 1.8 % NCO indicating that the reaction was complete (Theoretical NCO content: 1.7 %).

Then butyl acrylate (39.9 g) and ethyl methacrylate (102.6 g) were added to the prepolymer (95 g) which was still warm (60°C) in a 40/60 PU/Acrylate ratio. The carboxyl groups of DMPA were then neutralized by adding triethylamine (TEA; 3.6 g), resulting in a pH around 8. Temperature was decreased to 50°C and acetone (60 g) was added to this mixture in a 75/25 organic phase/acetone weight ratio. This mixture was mixed very well at 50 - 60°C for 30min.

The emulsification process was carried out as follows: The total amount of warm prepolymer/acrylate/acetone mixture was mixed with warm water (290.89 g) to obtain a mixture 45/55 by weight of PU-acrylate/water. The mixture was emulsified by strong mechanical stirring at 900 rpm for 30 min.

Then, the chain extension was performed by adding isophorone diamine at room temperature until no residual NCO was detected in IR.

Once the chain extension was finished, a reflux condenser was set up on the reaction flask and FeSO₄ heptahydrate (0.007 g) was added to the emulsion that was then heated to 55°C. Then, the initiator system (formamidine sulfinic acid 400 mg plus a tert-butyl hydroperoxide 570 mg both a 2 wt.-% solution in water) were carefully simultaneously added to the reaction mixture controlling that the temperature did not exceed 57-58°C. When the polymerization was completed, the mixture was stirred at 55°C for 1 h and the resulting dispersion was left overnight to cool down to room temperature. Next day, dispersion was mixed with 0.6 wt.-% antifoam compound (Foamstar PG 2706, BASF) and then the acetone was removed by vacuum distillation. Finally, the dispersion was filtered and the particle size was measured.
Final solid content: 45%
Final particle size (DLS, ISO 22412): 192.6 nm

### Example 2:

Realkyd 20112 polyester polyol (38.85 g), Krasol HLBH-P 2000 saturated polybutadiene polyol (10.99 g), Ixol M125 halogenated polyether polyol (5.56 g), DMPA anionic stabilizer (4.8 g) and Pluronic PE3500 (9.01 g) nonionic stabilizer were placed in a 1000 mL three necked round bottom flask equipped with a condenser and a mechanical stirrer. The mixture was heated to 75 °C. At this temperature, the solid components melted and a homogeneous mixture was obtained. At this point, high vacuum was applied (< 0.1 mbar) while the temperature was set to 75 °C in order to remove water. The mixture was left stirring under vacuum at 75°C for three hours.

Once dried, the vacuum was stopped and the mixture was flushed with argon, cooled to 60 °C and GAE (3-Allyloxy-1,2-propanediol, 0.75 g) was added to the mixture (no temperature increase was observed), and then IPDI (isophorone diisocyanate, 22.6 g) was also added (again, no temperature increase was observed).

Then the first portion of the catalyst (dimethyldineodecanoatetin, 20 mg of a freshly prepared tin catalyst (Fomrez UL-28) / acetone, 1:1 mixture) was added. Upon addition of the catalyst, the temperature raised rapidly to 80 °C. When the temperature increase stopped, the heating was set to 80 °C and once at this temperature, it was stirred for 1 hour and a second identical portion of catalyst solution was added. The reaction mixture was left stirring at 60 °C overnight and NCO-content measured next morning: 1.9 % NCO indicating that the reaction was complete (Theoretical NCO content: 1.7 %).

Then butyl acrylate (38.22 g) and ethyl methacrylate (98.28 g) were added to the prepolymer (91 g) which was still warm (60°C) in a 40/60 PU/Acrylate ratio. The carboxyl groups of DMPA were then neutralized by adding triethylamine (TEA; 2.19 g), resulting in a pH around 8. Temperature was decreased to 50°C and acetone (87 g) was added to this mixture in a 60/40 organic phase/acetone weight ratio. This mixture was mixed very well at 50 - 60°C for 30min.

The emulsification process was carried out as follows: The total amount of warm prepolymer/acrylate/acetone mixture was mixed with warm water (279 g) to obtain a mixture 45/55 by weight of PU-acrylate/water. The mixture was emulsified by strong mechanical stirring at 900 rpm for 30 min.

Then, the chain extension was performed by adding isophorone diamine at room temperature until no residual NCO was detected in IR.

Once the chain extension was finished, a reflux condenser was set up on the reaction flask and FeSO₄ heptahydrate (0.007 g) was added to the emulsion that was then heated to 55°C. Then, the initiator system (formamidine sulfinic acid 400 mg plus a tert-butyl hydroperoxide 570 mg both a 2 wt.-% solution in water) were carefully simultaneously added to the reaction mixture controlling that the temperature did not exceed 57-58°C. When the polymerization was completed, the mixture was stirred at 55°C for 1 h and the resulting dispersion was left overnight to cool down to room temperature. Next day, dispersion was mixed with 0.6 wt.-% antifoam compound (Foamstar PG 2706, BASF) and then the acetone was removed by vacuum distillation. Finally, the dispersion was filtered and the particle size was measured.
Final solid content: 45%
Final particle size (DLS, ISO 22412): 155 nm

### Example 3:

Realkyd 20112 polyester polyol (38.4 g), Krasol HLBH-P 2000 saturated polybutadiene polyol (11 g), Ixol M125 halogenated polyether polyol (5.5 g), DMPA (4.7 g) anionic stabilizer and Pluronic PE 3500 (9 g) nonionic stabilizer in a 1000 mL three necked round bottom flask equipped with a condenser and a mechanical stirrer. The mixture was heated to 80 °C. At this temperature, the solid components melted and a homogeneous mixture was obtained. At this point, high vacuum was applied (< 0.1 mbar) while the temperature was set to 80 °C in order to remove water. The mixture was left stirring under vacuum at 80°C for three hours.

Once dried, the vacuum was stopped and the mixture was flushed with argon, cooled to 60 °C and GAE (3-Allyloxy-1,2-propanediol, 0.75 g) was added to the mixture (no temperature increase was observed), and then IPDI (isophorone diisocyanate, 22 g) was also added (again, no temperature increase was observed).

Then the first portion of the catalyst (dimethyldineodecanoatetin, 20 mg of a freshly prepared tin catalyst (Fomrez UL-28) / acetone, 1:1 mixture) was added. Upon addition of the catalyst, the temperature raised rapidly to 80 °C. When the temperature increase stopped, the heating was set to 80 °C and once at this temperature, it was stirred for 1 hour and a second identical portion of catalyst solution was added. The reaction mixture was left stirring at 50 °C overnight and NCO-content measured next morning: 1.8 % NCO indicating that the reaction was complete (Theoretical NCO content: 1.7 %).

Then butyl acrylate (37 g) and ethyl methacrylate (96 g) were added to the prepolymer (89 g) which was still warm (50°C) in a 40/60 PU/Acrylate ratio. The carboxyl groups of DMPA were then neutralized by adding triethylamine (TEA; 3.5 g), resulting in a pH around 8. Temperature was decreased to 50°C and acetone (56 g) was added to this mixture in a 75/25 organic phase/acetone weight ratio. This mixture was mixed very well at 50 - 60°C for 30min.

The emulsification process was carried out as follows: The total amount of warm prepolymer/acrylate/acetone mixture was mixed with warm aqueous phase formed by rosin resin Tacolyn 3509 (24 g aqueous dispersion with solid content 55%) and water (277 g) to obtain a mixture 45/55 by weight of PU-acrylate/water-rosin resin. The mixture was emulsified by strong mechanical stirring at 900 rpm for 30 min.

Then, the chain extension was performed by adding isophorone diamine at room temperature until no residual NCO was detected in IR.

Once the chain extension was finished, a reflux condenser was set up on the reaction flask and FeSO₄ heptahydrate (0.01 g) was added to the emulsion that was then heated to 55°C. Then, the initiator system (formamidine sulfinic acid 400 mg plus a tert-butyl hydroperoxide 570 mg both a 2 wt.-% solution in water) were carefully simultaneously added to the reaction mixture controlling that the temperature did not exceed 57-58°C. When the polymerization was completed, the mixture was stirred at 55°C for 1 h and the resulting dispersion was left overnight to cool down to room temperature. Next day, dispersion was mixed with 0.6 wt.-% antifoam compound (Foamstar PG 2706, BASF) and then the acetone was removed by vacuum distillation. Finally, the dispersion was filtered and the particle size was measured.
Final solid content: 42%
Final particle size (DLS, ISO 22412): 205 nm

### Example 4:

Realkyd 20112 polyester polyol (17.5 g), Krasol HLBH-P 2000 saturated polybutadiene polyol (4.1 g), Ixol M125 halogenated polyether polyol (2.36 g), DMPA anionic stabilizer (2.9 g) and Pluronic PE3500 (5.24 g) nonionic stabilizer were placed in a 1000 mL three necked round bottom flask equipped with a condenser and a mechanical stirrer. The mixture was heated to 75 °C. At this temperature, the solid components melted and a homogeneous mixture was obtained. At this point, high vacuum was applied (< 0.1 mbar) while the temperature was set to 75 °C in order to remove water. The mixture was left stirring under vacuum at 75°C for three hours.

Once dried, the vacuum was stopped and the mixture was flushed with argon, cooled to 60 °C and GAE (3-Allyloxy-1,2-propanediol, 0.75 g) was added to the mixture (no temperature increase was observed), and then IPDI (isophorone diisocyanate, 12.3 g) was also added (again, no temperature increase was observed).

Then the first portion of the catalyst (dimethyldineodecanoatetin, 20 mg of a freshly prepared tin catalyst (Fomrez UL-28) / acetone, 1:1 mixture) was added. Upon addition of the catalyst, the temperature raised rapidly to 80 °C. When the temperature increase stopped, the heating was set to 80 °C and once at this temperature, it was stirred for 1 hour and a second identical portion of catalyst solution was added. The reaction mixture was left stirring at 60 °C overnight and NCO-content measured next morning: 1.8 % NCO indicating that the reaction was complete (Theoretical NCO content: 1.7 %).

Then butyl acrylate (49.28 g) and ethyl methacrylate (126.72 g) were added to the prepolymer (45 g) which was still warm (60°C) in a 20/80 PU/Acrylate ratio. The carboxyl groups of DMPA were then neutralized by adding triethylamine (TEA; 3.57 g), resulting in a pH around 8. Temperature was decreased to 50°C and acetone (55 g) was added to this mixture in a 60/40 organic phase/acetone weight ratio. This mixture was mixed very well at 50 - 60°C for 30min.

The emulsification process was carried out as follows: The total amount of warm prepolymer/acrylate/acetone mixture was mixed with warm water (269 g) to obtain a mixture 45/55 by weight of PU-acrylate/water. The mixture was emulsified by strong mechanical stirring at 900 rpm for 30 min.

Then, the chain extension was performed by adding MXDA at room temperature until no residual NCO was detected in IR.

Once the chain extension was finished, a reflux condenser was set up on the reaction flask and FeSO₄ heptahydrate (0.017 g) was added to the emulsion that was then heated to 55°C. Then, the initiator system (formamidine sulfinic acid 400 mg plus a tert-butyl hydroperoxide 570 mg both a 2 wt.-% solution in water) were carefully simultaneously added to the reaction mixture controlling that the temperature did not exceed 57-58°C. When the polymerization was completed, the mixture was stirred at 55°C for 1 h and the resulting dispersion was left overnight to cool down to room temperature. Next day, dispersion was mixed with 1 wt.-% antifoam compound (Foamstar PG 2706, BASF) and then the acetone was removed by vacuum distillation. Finally, the dispersion was filtered and the particle size was measured.
Final solid content: 45%
Final particle size (DLS, ISO 22412): 190 nm

### Example 5:

Realkyd 20112 polyester polyol (17.6), Krasol HLBH-P 2000 saturated polybutadiene polyol (4.17 g), Ixol M125 halogenated polyether polyol (2.35 g), DMPA anionic stabilizer (2.93 g) and Pluronic PE3500 (5.27 g) nonionic stabilizer were placed in a 1000 mL three necked round bottom flask equipped with a condenser and a mechanical stirrer. The mixture was heated to 75 °C. At this temperature, the solid components melted and a homogeneous mixture was obtained. At this point, high vacuum was applied (< 0.1 mbar) while the temperature was set to 75 °C in order to remove water. The mixture was left stirring under vacuum at 75°C for three hours.

Once dried, the vacuum was stopped and the mixture was flushed with argon, cooled to 60 °C and GAE (3-Allyloxy-1,2-propanediol, 0.75 g) was added to the mixture (no temperature increase was observed), and then IPDI (isophorone diisocyanate, 12.14 g) was also added (again, no temperature increase was observed).

Then the first portion of the catalyst (dimethyldineodecanoatetin, 20 mg of a freshly prepared tin catalyst (Fomrez UL-28) / acetone, 1:1 mixture) was added. Upon addition of the catalyst, the temperature raised rapidly to 80 °C. When the temperature increase stopped, the heating was set to 80 °C and once at this temperature, it was stirred for 1 hour and a second identical portion of catalyst solution was added. The reaction mixture was left stirring at 60 °C overnight and NCO-content measured next morning: 1.8 % NCO indicating that the reaction was complete (Theoretical NCO content: 1.7 %).

Then butyl acrylate (28.75 g) and ethyl methacrylate (73.92 g) were added to the prepolymer (45 g) which was still warm (60°C) in a 30/70 PU/Acrylate ratio. The carboxyl groups of DMPA were then neutralized by adding triethylamine (TEA; 3.57 g), resulting in a pH around 8. Temperature was decreased to 50°C and acetone (36.75 g) was added to this mixture in a 60/40 organic phase/acetone weight ratio. This mixture was mixed very well at 50 - 60°C for 30min.

The emulsification process was carried out as follows: The total amount of warm prepolymer/acrylate/acetone mixture was mixed with warm water (179.7 g) to obtain a mixture 45/55 by weight of PU-acrylate/water. The mixture was emulsified by strong mechanical stirring at 900 rpm for 30 min.

Then, the chain extension was performed by adding MXDA at room temperature until no residual NCO was detected in IR.

Once the chain extension was finished, a reflux condenser was set up on the reaction flask and FeSO₄ heptahydrate (0.010 g) was added to the emulsion that was then heated to 55°C. Then, the initiator system (formamidine sulfinic acid 400 mg plus a tert-butyl hydroperoxide 570 mg both a 2 wt.-% solution in water) were carefully simultaneously added to the reaction mixture controlling that the temperature did not exceed 57-58°C. When the polymerization was completed, the mixture was stirred at 55°C for 1 h and the resulting dispersion was left overnight to cool down to room temperature. Next day, dispersion was mixed with 1 wt.-% antifoam compound (Foamstar PG 2706, BASF) and then the acetone was removed by vacuum distillation. Finally, the dispersion was filtered and the particle size was measured.
Final solid content: 42%
Final particle size (DLS, ISO 22412): 152 nm

### Example 6:

The water-based adhesive compositions described in Examples 1 - 5 (formulations 1 - 5) were blended with EW-5303 resin (Toyobo) and then evaluated in terms of peeling strength in an Instron® Universal Testing Machine 3166 at a crosshead speed of 100 cm/min. The materials bonded were polypropylene/ foam (PP/foam foil). The results are described in Table 1.

| Formulation | Average Peel Strength (N/cm) |
|---|---|
| 1 | 1.77 |
| 2 | 2.87 |
| 3 | 2.06 |
| 4 | 3.96 |
| 5 | 4.28 |

## Claims

1. Process for manufacturing an aqueous polyurethane acrylate hybrid polymer dispersion, comprising:
(1) forming an NCO-terminated, vinyl-functionalized polyurethane prepolymer from a reaction mixture comprising:
(a) at least one polyol with a number average molecular weight Mₙ in the range of 400 to 10000 g/mol, preferably 500 g/mol to 4000 g/mol, more preferably 1000 g/mol to 3000 g/mol;
(b) at least one vinyl-functionalized polyol, preferably an allyl-functionalized polyol, wherein the at least one vinyl-functionalized polyol comprises at least two hydroxyl groups and at least one vinyl group;
(c) at least one halogenated polyether polyol;
(d) at least one anionic stabilizer, wherein the at least one anionic stabilizer comprises at least two hydroxyl groups and at least one negatively charged functional group, preferably a carboxyl or sulfonic acid group;
(e) at least one polyisocyanate, preferably at least one aliphatic di- and/or triisocyanate, wherein the at least one polyisocyanate is used in molar excess relative to the hydroxy groups of the other components of the reaction mixture to obtain an NCO-terminated, vinyl-functionalized polyurethane prepolymer;
(2) dissolving the prepolymer obtained in step (1) in at least one acrylic monomer to obtain a prepolymer/acrylic monomer mixture, wherein the amount of the prepolymer and the at least one acrylic monomer is selected such that the weight proportion of polyurethane/acrylic in the hybrid polymer is 10:90 to 50:50, preferably 20:80 to 40:60;
(3) dispersing the prepolymer/acrylic monomer mixture into a continuous aqueous phase under application of shear forces, preferably by mechanical stirring, to obtain an emulsion;
(4) reacting the prepolymer with at least one chain extension agent; and
(5) polymerizing the vinyl groups of the prepolymer and the at least one acrylic monomer to obtain the polyurethane acrylate hybrid polymer dispersion.

2. The process according to claim 1, wherein (i) the reaction mixture in step (1) and/or the at least one acrylic monomer in step (2), additionally comprises at least one (modified) polyolefin, polyacrylic or rosin-based resin; and/or (ii) a dispersion of at least one (modified) polyolefin, polyacrylic or rosin-based resin is incorporated into the continuous aqueous phase in step (3), wherein said (modified) polyolefin, polyacrylic or rosin-based resin comprises highly polar and highly unpolar segments that act as compatibilizers between the adhesive and the highly unpolar substrate.

3. The process according to claim 1 or 2, wherein the (modified) polyolefin, polyacrylic or rosin-based resin is selected from the group consisting of halogenated polyolefin resins, halogenated polyolefin maleic resins, preferably chlorinated polypropylene maleic resins, polyolefin maleic resins, styrene/ethylene-butylene copolymer, styrene/butadiene copolymer, styrene/ethylenepropylene copolymer, styrene/isoprene copolymer, (meth)acrylate ester/(meth)acrylic acid copolymer, rosin-acid resins, and rosin-ester resins.

4. The process according to any one of claims 1 to 3, wherein the process further comprises adding an organic co-solvent to the prepolymer/acrylic monomer mixture obtained in step (2) and dispersing the prepolymer/acrylic monomer/cosolvent mixture into a continuous aqueous phase and removing the cosolvent, preferably by vacuum distillation, after step (5).

5. The process according to claim 4, wherein
(1) the cosolvent is acetone; and/or
(2) the cosolvent is used in an amount of up to 50 wt.-% relative to the total weight of the prepolymer/acrylic monomer/cosolvent mixture.

6. The process according to any one of claims 1 to 5, wherein the at least one polyol (a) comprises at least one polybutadiene polyol and at least one polyester polyol, preferably in a weight ratio of 10:1 to 1:10.

7. The process according to any one of claims 1 to 6, wherein the vinyl-functionalized polyol
(a) is a vinyl group-containing diol; and/or
(b) is an allyl-functionalized polyol, preferably an polyol allyl ether, wherein the polyol allyl ether is preferably selected from monoethers of allyl alcohol with a polyol having three or more hydroxyl groups, preferably glycerol; and/or
(c) is a monomeric polyol; and/or
(d) has an average number molecular weight Mₙ less than 400 g/mol.

8. The process according to any one of claims 1 to 7, wherein the at least one anionic stabilizer comprises a sulfonated polyglycol and/or 2,2-bis(hydroxymethyl)propionic acid (DMPA).

9. The process according to any one of claims 1 to 8, wherein
(1) the at least one polyisocyanate is used in molar excess relative to the hydroxy groups of the combined polyols, the OH/NCO equivalent ratio preferably being 1:1.1 to 1:4, and/or
(2) the at least one polyisocyanate is at least one diisocyanate or triisocyanate, preferably selected from the group consisting of isophorone diisocyanate (IPDI), hexamethylene diisocyanate (HDI), polymeric polyisocyanates based on IPDI or HDI, and mixtures thereof.

10. The process according to any one of claims 1 to 9, wherein each of the at least one acrylic monomers is selected from acrylate monomers, methacrylate monomers and mixtures thereof, preferably hydrophobic acrylate monomers, methacrylate monomers and mixtures thereof, more preferably esters of (meth)acrylic acid with mono alcohols having 4 to 20, preferably 4 to 12 carbon atoms.

11. The process according to any one of claims 1 to 10, wherein step (3) comprises emulsifying the polyurethane prepolymer/acrylic monomer mixture into a continuous aqueous phase, preferably water, by mechanical stirring.

12. The process according to any one of claims 1 to 11, wherein the chain extension agent comprises at least two NCO-reactive groups and is preferably selected from the group consisting of water, a diol or a diamine, more preferably hydrazine, an alkylene diamine, a cycloalkylene diamine, an alkyldiol, or a polyetherdiamine, most preferably ethylene diamine, water, isophoronediamine, or a polyetherdiamine, and is optionally used in an amount that ensures essentially total conversion of the isocyanate groups.

13. Aqueous polyurethane hybrid dispersion obtainable according to a process of any one of claims 1 to 12.

14. Adhesive or coating composition, comprising the aqueous polyurethane/acrylic hybrid dispersion according to claim 13, optionally blended with at least one further rosin-based resin dispersion, at least one polyacrylic resin dispersion and/or at least one further (modified) polyolefin.

15. Use of the aqueous polyurethane/acrylic hybrid dispersion according to claim 13 in an adhesive or coating composition.

## Patentansprüche

1. Vorgang zum Herstellen einer wässrigen Polyurethanakrylathybridpolymer-Dispersion, umfassend:
(1) Ausbilden eines NCO-terminierten Vinyl-funktionalisierten Polyurethanpräpolymers aus einem Reaktionsgemisch, umfassend:
(a) mindestens ein Polyol mit einer zahlenmittleren Molekularmasse Mₙ in dem Bereich von 400 bis 10000 g/mol, bevorzugt 500 g/mol bis 4000 g/mol, stärker bevorzugt 1000 g/mol bis 3000 g/mol;
(b) mindestens ein Vinyl-funktionalisiertes Polyol, bevorzugt ein Allyl-funktionalisiertes Polyol, wobei das mindestens eine Vinyl-funktionalisierte Polyol mindestens zwei Hydroxylgruppen und mindestens eine Vinylgruppe umfasst;
(c) mindestens ein halogeniertes Polyetherpolyol;
(d) mindestens einen anionischen Stabilisator, wobei der mindestens eine anionische Stabilisator mindestens zwei Hydroxylgruppen und mindestens eine negativ geladene funktionelle Gruppe, bevorzugt eine Karboxy- oder Sulfonsäuregruppe, umfasst;
(e) mindestens ein Polyisocyanat , bevorzugt mindestens ein aliphatisches Di- und/oder Triisocyanat, wobei das mindestens eine Polyisocyanat in molarem Überschuss, bezogen auf die Hydroxygruppen der anderen Komponenten des Reaktionsgemischs, verwendet wird, um ein NCO-terminiertes, Vinyl-funktionalisiertes Polyurethanpräpolymer zu erhalten;
(2) Auflösen des in Schritt (1) erhaltenen Präpolymers in mindestens einen Akrylmonomer, um ein Präpolymer-Akrylmonomer-Gemisch zu erhalten, wobei die Menge des Präpolymers und des mindestens einen Akrylmonomers derart ausgewählt ist, dass der Gewichtsanteil von Polyurethan-Akryl in dem Hybridpolymer 10:90 bis 50:50, bevorzugt 20:80 bis 40:60, ist;
(3) Dispergieren des Präpolymer-Akrylmonomer-Gemischs in einer kontinuierlich wässrigen Phase unter Anwendung von Scherkräften, bevorzugt durch mechanisches Rühren, um eine Emulsion zu erhalten;
(4) Umsetzen des Präpolymers mit mindestens einem Kettenverlängerungsmittel; und
(5) Polymerisieren der Vinyl-Gruppen des Präpolymers und des mindestens einen Akrylmonomers, um die Polyurethanakrylathybridpolymer-Dispersion zu erhalten.

2. Vorgang nach Anspruch 1, wobei (i) das Reaktionsgemisch in Schritt (1) und/oder das mindestens eine Akrylmonomer in Schritt (2) zusätzlich mindestens ein (modifiziertes) Polyolefinharz, Polyakrylharz oder Harz auf Kolophonium-Basis umfasst; und/oder (ii) eine Dispersion von mindestens einem (modifizierten) Polyolefinharz, Polyakrylharz oder einem Harz auf Kolophonium-Basis in die kontinuierlich wässrige Phase in Schritt (3) einbezogen wird, wobei das (modifizierte) Polyolefinharz, das Polyakrylharz oder das Harz auf Kolophonium-Basis hoch polare und hoch unpolare Segmente umfasst, die als Kompatibilisatoren zwischen dem Klebstoff und dem hoch unpolaren Substrat wirken.

3. Vorgang nach Anspruch 1 oder 2, wobei das (modifizierte) Polyolefinharz, Polyakrylharz oder Harz auf Kolophonium-Basis aus der Gruppe, bestehend aus halogenierten Polyolefinharzen, halogenierten Polyolefinmaleinatharzen, bevorzugt aus chlorierten Polypropylenmaleinatharzen, Polyolefinmaleinatharzen, Styrol-Ethylen-Butylen-Kopolymer, Styrol-Butadien-Kopolymer, Styrol-Ethylen-Propylen-Kopolymer, Styrol-Isopren-Kopolymer, (Meth)akrylatester-(Meth)akrylsäure-Kopolymer, Kolophoniumsäureharzen und Kolophoniumesterharzen, ausgewählt ist.

4. Vorgang nach einem der Ansprüche 1 bis 3, wobei der Vorgang ferner ein Hinzugeben eines organischen Co-Lösungsmittels zu dem Präpolymer-Akrylmonomer-Gemisch, das in Schritt (2) erhalten wurde, und ein Dispergieren des PräpolymerAkrylmonomer-Co-Lösungsmittel-Gemischs in einer kontinuierlich wässrigen Phase und ein Entfernen des Co-Lösungsmittels, bevorzugt durch Vakuumdestillation, nach Schritt (5) umfasst.

5. Vorgang nach Anspruch 4, wobei
(1) das Co-Lösungsmittel Azeton ist; und/oder
(2) das Co-Lösungsmittel in einer Menge von bis zu 50 Gew.-% bezogen auf das Gesamtgewicht des Präpolymer-Akrylmonomer-Co-Lösungsmittel-Gemischs verwendet wird.

6. Vorgang nach einem der Ansprüche 1 bis 5, wobei das mindestens eine Polyol (a) mindestens ein Polybutadienpolyol und mindestens ein Polyesterpolyol, bevorzugt in einem Gewichtsverhältnis von 10:1 bis 1:10, umfasst.

7. Vorgang nach einem der Ansprüche 1 bis 6, wobei das Vinyl-funktionalisierte Polyol
(a) ein Vinylgruppe-enthaltendes Diol ist; und/oder
(b) ein Allyl-funktionalisiertes Polyol, bevorzugt ein Polyolallylether, ist, wobei das Polyolallylether bevorzugt aus Monoethern von Allylalkoholen mit einem Polyol ausgewählt ist, das drei oder mehr Hydroxylgruppen, bevorzugt Glyzerol, aufweist; und/oder
(c) ein monomeres Polyol ist; und/oder
(d) eine zahlenmittlere Molekularmasse Mₙ von weniger als 400 g/mol aufweist.

8. Vorgang nach einem der Ansprüche 1 bis 7, wobei der mindestens eine anionische Stabilisator ein sulfoniertes Polyglykol und/oder 2,2-Bis(hydroxymethyl)propionsäure (DMPA) umfasst.

9. Vorgang nach einem der Ansprüche 1 bis 8, wobei
(1) das mindestens eine Polyisocyanat in molarem Überschuss bezogen auf die Hydroxygruppen der kombinierten Polyole verwendet wird, wobei das OH/NCO-Äquivalentverhältnis bevorzugt 1:1,1 bis 1:4 ist, und/oder
(2) das mindestens eine Polyisocyanat mindestens ein Diisocyanat oder Triisocyanat ist, bevorzugt ausgewählt aus der Gruppe bestehend aus Isophorondiisocyanat (IPDI), Hexamethylendiisocyanat (HDI), polymeren Polyisocyanaten auf Basis von IPDI oder HDI und Gemischen daraus.

10. Vorgang nach einem der Ansprüche 1 bis 9, wobei jedes der mindestens einen Akrylmonomere aus Akrylatmonomeren, Methakrylatmonomeren und Gemischen daraus, bevorzugt aus hydrophoben Akrylatmonomeren, Methakrylatmonomeren und Gemischen daraus, stärker bevorzugt aus Estern von (Meth)akrylsäure mit Monoalkoholen, die 4 bis 20, bevorzugt 4 bis 12, Kohlenstoffatome aufweisen, ausgewählt ist.

11. Vorgang nach einem der Ansprüche 1 bis 10, wobei Schritt (3) ein Emulgieren des Polyurethanpräpolymerakrylmonomer-Gemischs in eine kontinuierlich wässrige Phase, bevorzugt Wasser, durch mechanisches Rühren umfasst.

12. Vorgang nach einem der Ansprüche 1 bis 11, wobei das Kettenverlängerungsmittel mindestens zwei NCO-reaktive Gruppen umfasst und bevorzugt aus der Gruppe, bestehend aus Wasser, einem Diol oder einem Diamin, stärker bevorzugt aus Hydrazin, einem Alkylendiamin, einem Zykloalkylendiamin, einem Alkyldiol oder einem Polyetherdiamin, am stärksten bevorzugt aus Ethylendiamin, Wasser, Isophorondiamin oder einem Polyetherdiamin, ausgewählt ist, und optional in einer Menge verwendet wird, die im Wesentlichen eine Gesamtumsetzung der Isocyanatgruppen gewährleistet.

13. Wässrige Polyurethanhybrid-Dispersion, die nach einem Vorgang nach einem der Ansprüche 1 bis 12 erhältlich ist.

14. Klebstoff oder Beschichtungszusammensetzung, umfassend die wässrige PolyurethanAkrylhybrid-Dispersion nach Anspruch 13, optional vermischt mit mindestens einem weiteren Harz auf Kolophonium-Basis, mindestens einer Polyakrylharz-Dispersion und/oder mindestens einem weiteren (modifizierten) Polyolefin.

15. Verwendung der wässrigen Polyurethanakrylhybrid-Dispersion nach Anspruch 13 in einem Klebstoff oder einer Beschichtungszusammensetzung.

## Revendications

1. Procédé de fabrication d'une dispersion aqueuse de polymère hybride d'acrylate de polyuréthanne, comprenant :
(1) la formation d'un prépolymère de polyuréthane à fonctionnalité vinyle et à terminaison NCO à partir d'un mélange réactionnel comprenant :
(a) au moins un polyol présentant une masse moléculaire moyenne en nombre Mₙ située dans la plage allant de 400 à 10 000 g/mol, de préférence de 500 g/mol à 4 000 g/mol, plus préférablement de 1 000 g/mol à 3 000 g/mol ;
(b) au moins un polyol à fonctionnalité vinyle, de préférence un polyol à fonctionnalité allyle, l'au moins un polyol à fonctionnalité vinyle comprenant au moins deux groupes hydroxyle et au moins un groupe vinyle ;
(c) au moins un polyol de polyéther halogéné ;
(d) au moins un stabilisant anionique, l'au moins un stabilisant anionique comprenant au moins deux groupes hydroxyle et au moins un groupe fonctionnel à charge négative, de préférence un groupe acide carboxylique ou sulfonique ;
(e) au moins un polyisocyanate, de préférence au moins un di- et/ou tri-isocyanate aliphatique, l'au moins un polyisocyanate étant utilisé en excédent molaire par rapport aux groupes hydroxyle des autres constituants du mélange réactionnel, pour obtenir un prépolymère de polyuréthane à fonctionnalité vinyle et à terminaison NCO ;
(2) la dissolution du prépolymère obtenu à l'étape (1) dans au moins un monomère acrylique, pour obtenir un mélange prépolymère/monomère acrylique, la quantité du prépolymère et de l'au moins un monomère acrylique étant choisie de sorte que la proportion en poids du polyuréthane/monomère acrylique dans le polymère hybride se situe dans la plage allant de 10:90 à 50:50, de préférence de 20:80 à 40:60 ;
(3) la dispersion du mélange prépolymère/monomère acrylique dans une phase aqueuse continue sous application de forces de cisaillement, de préférence par agitation mécanique, pour obtenir une émulsion ;
(4) la réaction du prépolymère avec au moins un agent d'extension de chaîne ; et
(5) la polymérisation des groupes vinyle du prépolymère et de l'au moins un monomère acrylique pour obtenir la dispersion de polymère hybride d'acrylate de polyuréthane.

2. Procédé selon la revendication 1, dans lequel (i) le mélange réactionnel de l'étape (1) et/ou l'au moins un monomère acrylique de l'étape (2) comprend en outre au moins une résine (modifiée) à base de polyoléfine, de polyacryle ou de colophane ; et/ou (ii) une dispersion d'au moins une résine (modifiée) à base de polyoléfine, de polyacryle ou de colophane est incorporée dans la phase aqueuse continue de l'étape (3), ladite résine (modifiée) à base de polyoléfine, de polyacryle ou de colophane comprenant des segments hautement polaires et hautement non polaires qui agissent en tant que compatibilisants entre l'adhésif et le substrat hautement non polaire.

3. Procédé selon la revendication 1 ou 2, dans lequel la résine (modifiée) à base de polyoléfine, de polyacryle ou de colophane est choisie dans le groupe constitué par les résines de polyoléfine halogénées, les résines maléiques de polyoléfine halogénées, de préférence les résines maléiques de polypropylène chlorées, les résines maléiques de polyoléfine, un copolymère styrène/éthylène-butylène, un copolymère styrène/butadiène, un copolymère styrène/éthylène-propylène, un copolymère styrène/isoprène, un copolymère ester de (méth)acrylate/acide (méth)acrylique, les résines à base d'acide résinique et les résines à base d'ester de colophane.

4. Procédé selon l'une quelconque des revendications 1 à 3, dans lequel le procédé comprend en outre l'ajout d'un cosolvant organique au mélange prépolymère/monomère acrylique obtenu à l'étape (2), la dispersion du mélange prépolymère/monomère acrylique/cosolvant dans une phase aqueuse continue et l'élimination du cosolvant, de préférence par distillation sous vide, après l'étape (5).

5. Procédé selon la revendication 4, dans lequel
(1) le cosolvant est de l'acétone ; et/ou
(2) le cosolvant est utilisé en une quantité allant jusqu'à 50 % en poids par rapport au poids total du mélange prépolymère/monomère acrylique/cosolvant.

6. Procédé selon l'une quelconque des revendications 1 à 5, dans lequel l'au moins un polyol (a) comprend au moins un polyol de polybutadiène et au moins un polyol de polyester, de préférence dans un rapport pondéral situé dans la plage allant de 10:1 à 1:10.

7. Procédé selon l'une quelconque des revendications 1 à 6, dans lequel le polyol à fonctionnalité vinyle
(a) est un diol contenant un groupe vinyle ; et/ou
(b) est un polyol à fonctionnalité allyle, de préférence un éther allylique de polyol, l'éther allylique de polyol étant de préférence choisi parmi les monoéthers d'alcool allylique avec un polyol ayant trois groupes hydroxyle ou plus, de préférence le glycérol ; et/ou
(c) est un polyol monomère ; et/ou
(d) présente une masse moléculaire moyenne en nombre Mₙ inférieure à 400 g/mol.

8. Procédé selon l'une quelconque des revendications 1 à 7, dans lequel l'au moins un stabilisant anionique comprend un polyglycol sulfoné et/ou de l'acide 2,2-bis(hydroxyméthyl)propionique (DMPA).

9. Procédé selon l'une quelconque des revendications 1 à 8, dans lequel
(1) l'au moins un polyisocyanate est utilisé en excédent molaire par rapport aux groupes hydroxyle des polyols combinés, le rapport en équivalents OH/NCO étant de préférence situé dans la plage allant de 1:1,1 à 1:4, et/ou
(2) l'au moins un polyisocyanate est au moins un diisocyanate ou un tri-isocyanate, de préférence choisi dans le groupe constitué par le diisocyanate d'isophorone (IPDI), le diisocyanate d'hexaméthylène (HDI), les polyisocyanates polymères à base de IPDI ou de HDI et les mélanges de ceux-ci.

10. Procédé selon l'une quelconque des revendications 1 à 9, dans lequel chacun des au moins un monomère acrylique est choisi parmi les monomères d'acrylate, les monomères de méthacrylate et les mélanges de ceux-ci, de préférence les monomères d'acrylate et les monomères de méthacrylate hydrophobes et les mélanges de ceux-ci, et plus préférablement les esters d'acide (méth)acrylique avec des mono-alcools ayant de 4 à 20, de préférence de 4 à 12 atomes de carbone.

11. Procédé selon l'une quelconque des revendications 1 à 10, dans lequel l'étape (3) comprend l'émulsification du mélange prépolymère de polyuréthane/monomère acrylique dans une phase aqueuse continue, de préférence dans l'eau, par agitation mécanique.

12. Procédé selon l'une quelconque des revendications 1 à 11, dans lequel l'agent d'extension de chaîne comprend au moins deux groupes NCO-réactifs et est de préférence choisi dans le groupe constitué par l'eau, un diol ou une diamine, plus préférablement l'hydrazine, une alkylènediamine, une cycloalkylènediamine, un alkyldiol ou une polyétherdiamine, de manière préférée entre toutes l'éthylènediamine, l'eau, l'isophoronediamine ou une polyétherdiamine, et est éventuellement utilisé en une quantité permettant la conversion quasi-totale des groupes isocyanate.

13. Dispersion aqueuse hybride de polyuréthane pouvant être obtenue par un procédé selon l'une quelconque des revendications 1 à 12.

14. Composition d'adhésif ou de revêtement, comprenant la dispersion aqueuse hybride de polyuréthane/monomère acrylique selon la revendication 13, éventuellement mélangée à au moins une autre dispersion de résine à base de colophane, au moins une dispersion de résine de polyacryle et/ou au moins une autre polyoléfine (modifiée).

15. Utilisation de la dispersion aqueuse hybride de polyuréthane/monomère acrylique selon la revendication 13 dans une composition d'adhésif ou de revêtement.
